# EUROPEAN PATENT SPECIFICATION

(11) **EP 0 514 497 B1**
(45) Date of publication and mention of the grant of the patent: **06.12.1995**
(21) Application number: 91906815.5
(22) Date of filing: 05.02.1991
(51) Int. Cl.: B29C 65/60, F16B 19/06

(54) **APPARATUS AND METHOD FOR UPSETTING COMPOSITE FASTENERS**
VORRICHTUNG UND VERFAHREN ZUM STAUCHEN VON BEFESTIGUNGSELEMENTEN AUS VERBUNDWERKSTOFF
APPAREIL ET PROCEDE DE REFOULEMENT D'ATTACHES COMPOSITES

(30) Priority: 05.02.1990 US 475155
(43) Date of publication of application: 25.11.1992
(73) Proprietor: TEXTRON INC., Providence Rhode Island 02903 (US)
(72) Inventor: SIMMONS, Clyde, D., Riverside, CA 92503 (US)
(74) Representative: Sommerville, John Henry
(86) International application number: US9100765
(87) International publication number: WO9111309

(56) References cited:
- EP-A- 0 268 957
- AU-A- 39 847
- DE-A- 2 248 471
- DE-A- 2 641 804
- DE-A- 3 109 500
- DE-A- 3 543 105
- GB-A- 555 151
- GB-A- 2 078 666
- GB-A- 2 173 139
- GB-A- 2 205 374
- US-A- 2 510 693

## Description

### Background of the Invention

The use of composite materials in the construction of military and commercial aerospace vehicles is widespread and increasing. The most commonly used composites consist of a polymer matrix reinforced with fibers of such materials as carbon, glass and Kevlar.

In many cases relatively thin composite panels are used. At the present time, panels .2 to .5 cm (.088 to .189 inches) in thickness appear to be most common, although thicker and thinner parts are also used.

To fasten such panels together, adhesive bonding is used wherever possible. When adhesive bonding alone is judged insufficient, fasteners are used in addition to, or in place of, adhesives.

In the manufacture of conventional aluminum aircraft, solid aluminum rivets have been used successfully in very large quantities to fasten the sheet thicknesses mentioned, starting in about 1935 and continuing to the present time. Aluminum rivets are not suitable, however, for use in composite sheet material for several reasons. Some composite materials cause accelerated corrosion of aluminum rivets. The coefficients of expansion of aluminum and the composite materials may be too widely different. A lightning strike problem can arise when aluminum or other metal rivets are used in a composite material. For these reasons a need exists for a rivet which is itself made from composite material.

Considerable work is now being done to enable rivets made from composite material to be used to fasten composite sheets, with or without prior adhesive bonding. Up to the present time, these composite solid rivets have been fabricated using the injection molding process to form a rivet having the required manufactured head shape at one end of the usual cylindrical shank portion. The shank portion is made sufficiently long to pass through the workpieces to be fastened and then protrude approximately two shank diameters beyond. Later, this two diameter protruding length is upset to form a "shop formed" head, which in conjunction with the manufactured head serves to hold the workpieces together.

Examples of suitable materials for making composite solid rivets by injection molding are PEI (polyetherimide) reinforced with short glass fibers and PEEK (polyetheretherketone) reinforced with short carbon fibers. Both these materials belong to a composite materials category which is commonly known as "thermoplastic." Such materials become soft and formable at temperatures in the 315 to 370°C (600 to 700°F) range but when cooled to room temperature exhibit useful structural strength.

Rivets made from these short fiber reinforced thermoplastic materials have typical average shear strengths of about 110,000 kPa (16 KSI) when measured using the method of MIL-STD-1312 Test 20 and have typical average tension strength in the range 96,500 to 110,000 kPa (14 to 16 KSI). These rivets may be upset with any simple tooling which is capable of providing a heat input to the two diameters of protruding rivet tail, followed by a pressure to upset this tail when it becomes soft and formable.

This riveting process seems to be gaining favor for fastening composite materials because the rivets themselves are easily made on readily available, high production injection molding machines and they are inexpensive compared to other suitable fasteners for composites, such as titanium threaded shear pins and collars. Also, experts in the composite aircraft field believe that the drilling of holes in a workpiece and the insertion and upsetting of these rivets can be easily automated. In this way, fastening may be accomplished with a simple inexpensive fastener using an inexpensive and reliable installation method.

In some thick or high bearing strength thin workpieces the 110,000 kPa (16 KSI) shear strength and the 83,000 to 96,500 kPa (12 to 14 KSI) tension strength of common short fiber reinforced thermoplastic materials is not adequate. Thus the need exists for a rivet made from composite material and having higher shear and tension strengths.

Long fiber reinforced threaded shear pin type fasteners having 276,000 to 414,000 kPa (40 to 60 KSI) average ultimate shear strength are known. High shear strength rivets can also be made from laid up panels as described in that application or from pultruded rod. However, it is difficult to upset rivets made in this way in a workpiece.

One method of deforming composite material into a fastener is described in GB-A-2 205 374. GB-A-2 205 74 discloses pressing a tool, with heat added, against a rod of composite material extending through a workpiece. The tool bends the fibers in the composite matrix outwardly, forming a flared head.

There still exists, however, a need for a simple and practical method of upsetting rivets made from long fiber reinforced material. There also exists a need to provide a shop upset profile which is sufficiently strong in tension to optimize lap joint shear strength.

### Summary of the Invention

The method of this invention involves a shaped upsetting anvil which is rotated at high speed about its axis and then forced into contact with a rivet tail end that preferably extends approximately three shank diameters beyond the workpiece. Friction causes the rivet tail to heat up until it becomes formable at which time the pressure urging the shaped anvil forward is allowed to progressively heat and upset the rivet tail until a shop formed head having the desired shape and dimensions is formed against the workpiece.

While it may be possible to use the method of the invention to upset composite rivets using a hand held tool, it is considered preferable that a machine be used on which the speed of the rotation of the anvil, the pressure applied to urge the anvil towards the workpiece and the speed of this advance are controllable. It is expected that such capabilities as this could most readily be built into such machines as are currently used extensively to install aluminum rivets and other types of aircraft fasteners automatically.

The method of the invention was primarily developed to upset long fiber reinforced rivets made from thermoplastic materials, which are difficult to upset satisfactorily by other methods. However, the method can also be used for upsetting short fiber injection molded thermoplastic rivets.

In forming the upset head, the anvil in the tool may be made in such a shape that the excess of melted material from the protruding rivet shank is spun radially outward in the form of a melted flash. This flash, when formed into a washer of appreciable thickness may serve as a useful provision for limiting the advance of the anvil and avoiding damage to the surface of the workpiece. This washer is also useful as a means of delaying the tilting of the rivet axis which occurs in a thin sheet lap shear joint under load, thereby increasing the shear strength of the rivet and joint combination.

### Brief Description of the Drawings

Figure 1 is a cross-sectional, elevational view of a fastener extending through workpieces to be fastened together and protruding beyond the back side sheet, and is further a cross-sectional, elevational view of an installation tool.

Figure 2 is a sectional view of the components of Figure 1 while the rivet tail is being upset using the method of the invention, with the partially sectioned installing tool in its operational position.

Figure 3 is a cross-sectional, elevational view of the installed rivet of Figure 2.

Figures 4-10 show stages in the manufacture of a suitable unidirectional reinforced solid rivet having long continuous reinforcing fibers all running in the same direction, parallel to the axis.

Figures 11 and 12 show a composite panel and rivet made from tape containing long, continuous, unidirectional reinforcing fibers, but with some tape plies having their fibers running in orientations other than parallel to the rivet axis.

### Detailed Description of the Preferred Embodiment

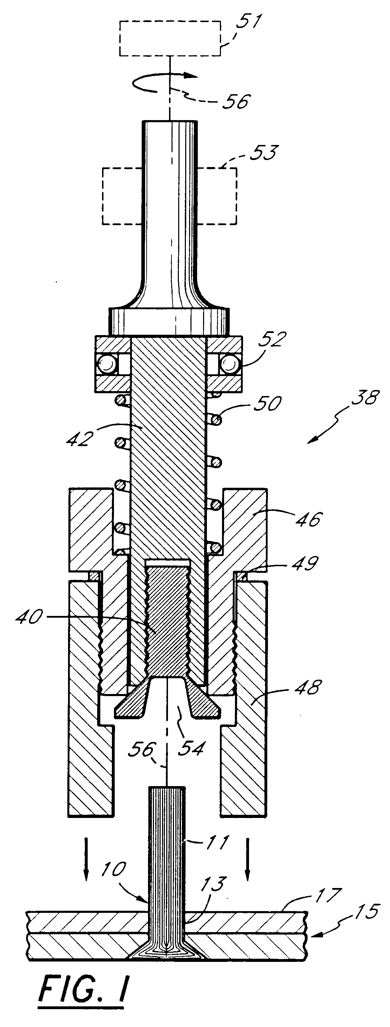

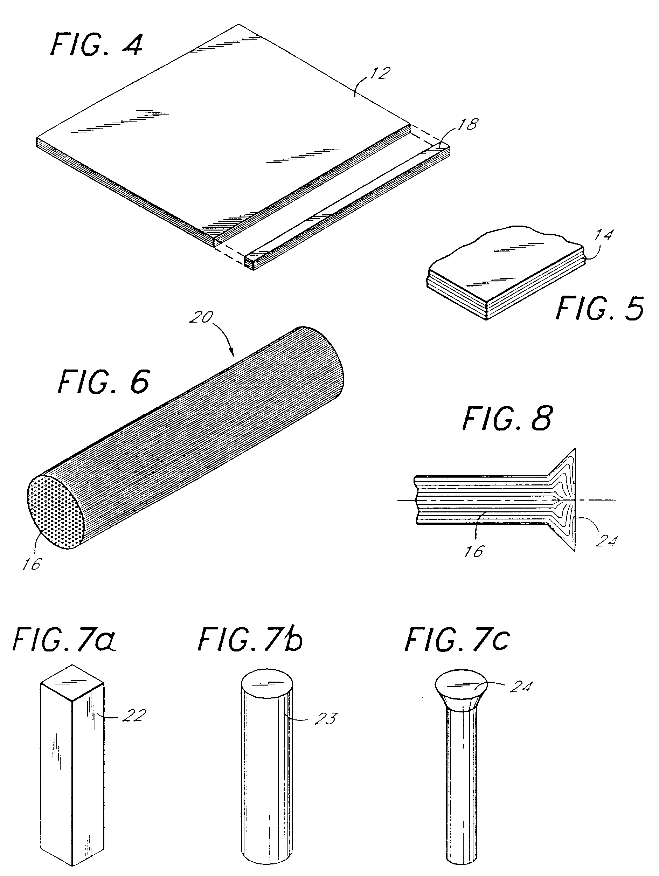

Figure 1 shows a solid rivet 10 made from a composite of a polymer matrix reinforced with fibers. Figures 4-10 illustrate one method of making such a rivet. The composite material is initially formed in thin sheet-like tapes, called plies, containing fibers which add to the strength of the plies. A suitable tape has a thickness of about .01 cm (.005 inches), but other thicknesses can be utilized. Each tape contains a plurality of individual carbon or other reinforcing fibers which are twisted or otherwise held together in a bundle referred to as a tow. A commonly used fiber is about 7 microns in diameter. A commonly used tow contains 12,000 individual fibers. The tows are arranged parallel to each other and are bound together using a binder of polymeric resin. A common binder for binding the carbon fibers and tows together is PEEK, referred to above. As will be appreciated from Figure 6, the schematically illustrated tows 16, each composed of individual filaments, are generally parallel to each other and greatly increase the shear strength of the tape in the direction perpendicular to the fibers. These tows also greatly increase the tension strength in the direction of the fiber flow axes. Since tows are often referred to as fibers, and a composite material in theory could have individual fibers rather than bundles or tows, the elements 16 will be for convenience referred to fibers, which is the most common term.

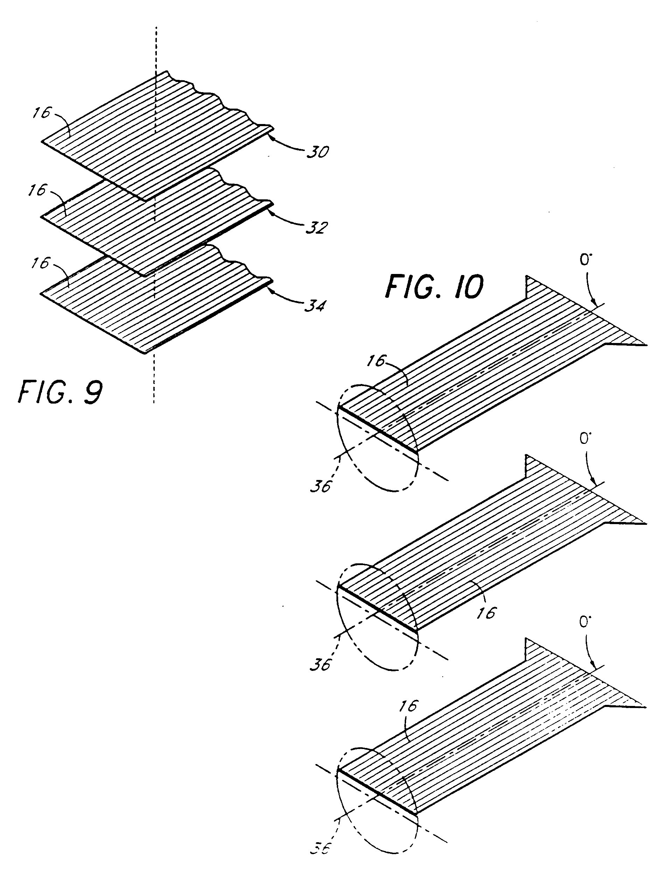

The tapes can be made into a panel 12, illustrated in Figure 4. To make a panel, a number of plies 14 of tape are stacked one on top of the other, as more clearly seen in Figures 5 and 9. The stack is then heated while applying a compressive load. This process causes the binder and adjacent plies 14 of tape to bind the plies together. After the panel 12 is formed, it is cooled. This creates a rigid composite panel having the desirable characteristics discussed above.

To use the material to make a fastener, a section or bar 18 is cut from the edge of the panel, as indicated in Figure 4. The bar 18 can then be machined either by turning it on a lathe or either by grinding it between centers and cutting it into shorter pieces to produce a cylindrical rod 20, as shown in Figure 6.

Figures 7a-7c show the manufacture of an individual rivet in stages. The square cross-section bar stock 22 is turned on a lathe or ground to produce a cylindrical blank, as shown in Figure 7b. The blank 23 can then be heated and compressed to form a head 24, shown in Figure 7c and in Figure 8.

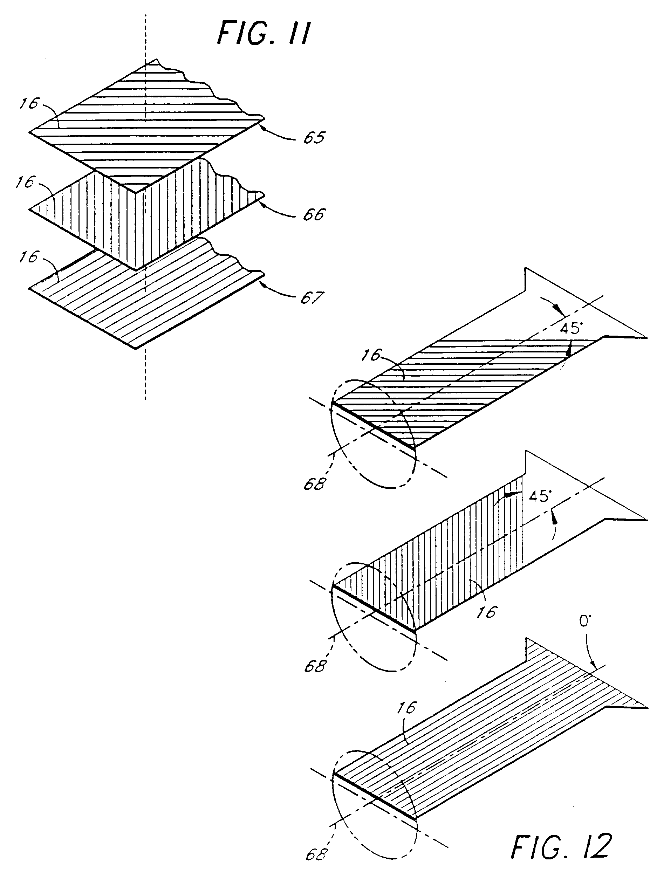

With the fibers 16 in all of the layers or plies of tape in the same direction, the layup produces what is termed a unidirectional, reinforced long fiber rivet, as seen in Figures 8 and 10. Other orientations may be useful; for example, a +45/-45/0 layup could be used. The layup angles describe the direction of the fibers 16 in each single tape layer relative to a zero line. This zero line coincides with what later becomes the long axis of the rivet. Referring to Figure 11, the top layer 65 represents a +45 angle. The second layer 66 represents a -45 angle, which is at 90° with respect to the layer 30, and the lower ply 66 represents a 0° or no angle. Figure 12 show how these fiber angles relate to the zero line 68 and to a manufactured fastener.

Although the layup and cut method is illustrated for producing blanks for forming the rivet of Figure 8, it should be realized that suitable blanks may also be made from many thermoplastic materials and continuous fibers by the pultrusion method, which is a well-known process in the plastic industry.

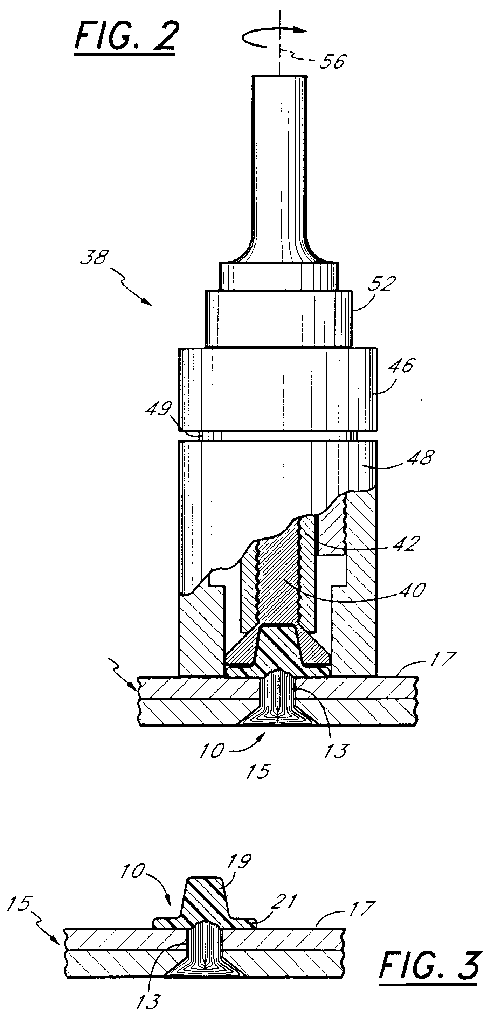

Referring again to Figure 1, the rivet 10 is shown inserted in the workpiece 15, and is of a length such that its tail 11 protrudes beyond the face 17 of the fastener, approximately 3 diameters of the workpiece shank 13. Also illustrated in Figures 1 and 2 is a suitable tool 38 for producing the desired upset in the rivet.

The tool 38 includes an anvil 40, mounted within the lower end of an elongated spindle 42. The upper end of the spindle engages with a suitable mechanism 53 (schematically shown) for rotating the spindle at considerable speeds. Surrounding the lower end of the spindle is a sleeve 46, connected by threads or other suitable means to a shroud 48, which surrounds the lower end of the sleeve and the spindle with the anvil in it, and extends beyond the lower end of the anvil in one position, as viewed in Figure 1. A spacer 49 extends between the upper end of the shroud and a shoulder of the sleeve. A coil spring 50 surrounds a portion of the spindle and extends between the sleeve and the lower portion of a thrust bearing 52 in which the spindle is mounted. Thus, the spring continuously urges the sleeve and the shroud downwardly in a direction to urge the shroud to extend beyond the anvil. Note from Figure 1 that the downward movement of the sleeve and shroud is limited by the lower end of the sleeve engaging the upper surface of the flared lower end of the anvil. In addition to the spindle being mounted for rotation, the entire tool is mounted for axial movement by suitable means 51 (schematically shown), and the shroud and spindle can move axially and rotationally relative to each other.

The lower end of the anvil has an internal cavity or recess 54 having a desired internal surface of revolution in the shape of a desired upset head to be formed on the rivet. The cavity has a frusto conical shape with the lower larger diameter end being an open mouth leading to an upper smaller diameter end.

To produce an upset, the axis 56 of the anvil of the tool is first aligned with the axis of the rivet to be upset. The spindle is then rotated at an appreciable speed; for example, 3,000 RPM, and the whole tool is moved at a preset rate of movement towards the rivet and the workpiece.

Referring to Figure 2, the lower end of the shroud 48 contacts the upper surface 17 of the workpiece 15, while the anvil 40 and the spindle 42 continue to rotate and approach the rivet tail 11. The spring 50 maintains the shroud 48 in contact with the workpiece 15. The thrust bearing 52 permits the spindle 42 to rotate while the shroud 48 remains stationary.

When the rotating anvil 40 contacts the end of the rivet tail 11 it is held in contact using a suitable pressure such that friction between the anvil and the rivet produces heat, without prematurely deforming the cold portion of the shank 13. When the melting temperature of the rivet is reached, (330°C (625°F) approximately in the case of PEEK) the melted portion of the rivet end begins to flow. Under the continued influence of pressure and friction the rivet upset continues to form. Melted PEEK matrix materials and reinforcing fibers are forced downwards and outwards until further downward and outward movement of the material is limited by the space available within the shroud. As noted above, the tail end volume is larger than the cavity volume such that melted material is spun radially outward to form a melted flash. This flash becomes a washer that limits the advance of the anvil. The washer also strengthens the finished joint with the workpiece.

Friction heating, melting and flowing continues until the available rivet tail volume has been deformed into a space of equal volume, defined by the anvil profile, the internal walls of the shroud and the top surface 17 of the workpiece 15.

At this point rotation of the tool spindle 42 is halted; but the pressure is maintained on the anvil 40, until the temperature of the deformed material in the upset head 19 falls to appreciably below the melting point of the PEEK material (for example, 205°C (400°F) or below) at which time the tool may be removed and a second rivet upset commenced.

The set fastener and finished joint are seen in Figure 3. As may be seen, the tail upset head 19 has a frusto-conical shape, with the smaller diameter upper end of the head tapering to a large diameter before flaring into an outwardly extending flange or washer 21. The fastener shank 13 in Figures 2 and 3 is shown with schematically indicated fiber lines comparable to Figures 8, in that it remains essentially unchanged during the tail upsetting. However, the upset head 19 is shown in conventional cross hatching, since the fibers appear distorted and indistinct in an enlarged cross section of a prototype.

The tool illustrated is an experimental prototype. It is expected that it will be further developed. For example, it is desirable that the tool be warm at the start of the operation so chat heat transfer to the rivet is speeded up. Thus, a means for preheating the tool other than friction may be provided. Also, it is desirable that immediately after formation of the upset head is complete and rotation is halted, the cooling of the upset head and tool is as rapid as possible. Therefore cooling fins may be added to the shroud 48 and cooling may also be applied to the spindle 42 and the anvil 40.

## Claims

1. A method of deforming the tail (11) of a rivet shank (13) protruding through a work piece (15), said shank (13) being formed of composite materials including a plurality of long fibers (16) held together by a thermoplastic binder, characterized by the steps of:
pressing a rotating anvil (40) against the end of said tail (11) to heat said binders by friction sufficiently to cause the binder to melt or soften and deform, together with the adjacent ends of the fibers (16) which are spun outwardly about the axis (56) of rotation into an upset head (19) sufficiently larger in diameter than the shank (13) to prevent the fastener (10) from being withdrawn from the work piece (15); and
withdrawing said anvil (40) from said upset head (19).

2. The method of Claim 1, wherein said anvil (40) has a cavity (54) formed on its end surface that engages said tail (11), and said deforming step is continued until the deformed tail material fills said cavity (54), thereby forming the upset head (19) into the shape of said cavity.

3. The method of Claim 2, wherein said anvil (40) has an annular end surface surrounding said cavity (54), and said cavity (54) is sized in relation to the volume of said tail (11) such that during said deforming step, portions (21) of said deformed tail (11) are spun outwardly from said cavity (54) and are flattened and compressed between said annular surface and the adjacent surface (17) of said work piece (15).

4. The method of Claims 2 or 3, wherein said cavity (54) has a frusto conical shape with a closed end and a larger open end which facilitates entry onto said tail (11) and removal from the deformed tail (19).

5. The method of Claim 4, wherein the open end of said cavity (54) has a diameter of about 1.3 times the diameter of said shank (13), and the closed end of said cavity (54) has a diameter about equal to the shank diameter.

6. The method of any one of the preceding claims, wherein the length of the portion (11) of said shank (13) initially protruding beyond said work piece (15) is about three times the diameter of said shank (13).

7. The method of any of the preceding claims, wherein the height of the upset head (19) protruding beyond the work piece (15) is a little less than one and one-half times the diameter of the shank (13).

8. The method of Claim 1, wherein the anvil (40) has a cavity (54) in its end face having an interior surface of revolution configured in the shape of the desired upset head (19), and said rotating step is performed about the axis (56) of said surface of revolution.

9. The method of any of the preceding claims, wherein said withdrawing occurs after said upset head is cooled enough to solidify.

10. The method of Claim 9, wherein said pressing is maintained until said upset head (19) has cooled enough to solidify.

11. A method of forming a joint using a composite fastener with a shank including a plurality of long fibers (16) held together by a thermoplastic binder comprising the steps of providing a plurality of work piece members, forming a hole through each of said work piece members, aligning said holes to form a work piece bore, inserting the fastener shank (13) through said work piece bore, urging a manufactured head (24) on said fastener (10) against said work piece (15), and providing an anvil (40) for upsetting the tail (11) of the fastener shank (13) against said workpiece, characterised by the further steps of providing a cavity (54) on the end surface of said anvil which is defined by an interior surface of revolution configured in the overall shape of a desired fastener upset head (19), rotating said anvil about the axis (56) of said surface of revolution, pressing said anvil against the fastener tail (11), said axis of said surface of revolution being aligned with the longitudinal axis of said tail, upsetting said tail until the material thereof fills said cavity, thereby forming said upset head (19), stopping the rotation of the anvil (40) while continuing to press said anvil against said upset head, and withdrawing said anvil from said upset head after the latter has cooled below the melting temperature of said binder.

12. A joint comprising a work piece (15) and a fastener (10) formed of long reinforcing fibers (16) held together by a thermoplastic material, said fastener (10) having a shop formed upset head (19) engaging a surface (17) of the work piece (15), characterized in that said upset head (19) has physical characteristics different from the shank (13) of the fasteners (10) as a result of having been deformed by frictional heat and pressure by way of a rotating anvil (40) having been pressed against a protruding end (11) of the fastener (10) during said rotating.

13. The joint of Claim 12, characterised in that said upset head (19) has a frusto conical shape and an outwardly extending washer-shaped flange (21) engaging said work piece (15) and formed integral with the fastener shank (13) and the frusto conical portion, said flange (21) including ends of said fibers that were spun outwardly during the formation of said head (19).

14. The joint of Claim 13, characterised in that said upset head (19) has an outwardly extending washer-shaped flange (21) engaging said workpiece (15) and formed integral with the fastener shank (13) and the upset head (19), said flange (21) including end of said fibers that were spun outwardly during the formation of said head (19).

## Patentansprüche

1. Verfahren zum Verformen des durch ein Werkstück (15) hindurchragenden Endstückes (11) eines Nietschafts (13), welcher aus Verbundwerkstoffen mit vielen langen Fasern (16) gebildet ist, die durch ein thermoplastisches Bindemittel zusammengehalten werden, gekennzeichnet durch die Schritte:
Drücken eines rotierenden Amboß (40) gegen das Ende des Endstückes (11), um die Bindemittel durch Reibung ausreichend zu erwärmen, so daß das Bindemittel schmilzt oder erweicht und sich zusammen mit den benachbarten Enden der Fasern (16) verformt, welche nach außen um die Drehachse (56) zu einem gestauchten Kopf (19) versponnen sind, dessen Durchmesser in ausreichendem Maße größer als der Schaft (13) ist, um ein Abziehen des Befestigungselementes (10) vom Werkstück (15) zu verhindern; und
Abheben des Amboß (40) vom gestauchten Kopf (19).

2. Verfahren nach Anspruch 1, dadurch gekennzeichnet, daß der Amboß (40) einen auf dessen Endfläche, welche in das Endstück (11) eingreift, ausgebildeten Hohlraum (54) aufweist und daß der Verformungsschritt weitergeführt wird, bis das verformte Endstückmaterial den Hohlraum (54) auffüllt, wobei der gestauchte Kopf (19) in die Form des Hohlraumes ausgestaltet wird.

3. Verfahren nach Anspruch 2, dadurch gekennzeichnet, daß der Amboß (40) eine den Hohlraum (54) umgebende ringförmige Endfläche aufweist und daß der Hohlraum (54) im Verhältnis zum Volumen des Endstückes (11) derart dimensioniert ist, daß während des Verformungsschrittes Bereiche (21) des verformten Endstückes (11) vom Hohlraum (54) nach außen versponnen und zwischen der ringförmigen Oberfläche und der benachbarten Oberfläche (17) des Werkstückes (15) abgeflacht und komprimiert werden.

4. Verfahren nach Anspruch 2 oder 3, dadurch gekennzeichnet, daß der Hohlraum (54) kegelstumpfförmig mit einem geschlossenen Ende und einem größeren offenen Ende ist, wodurch der Zugang auf das Endstück (11) und das Entrernen vom deformierten Kopf (19) erleichtert wird.

5. Verfahren nach Anspruch 4, dadurch gekennzeichnet, daß das offene Ende des Hohlraumes (54) einen Durchmesser aufweist, welcher ungefähr das 1,3-fache des Durchmessers des Schaftes (13) beträgt und daß das geschlossene Ende des Hohlraumes (54) einen ungefähr dem Schaftdurchmesser entsprechenden Durchmesser aufweist.

6. Verfahren nach einem der vorstehenden Ansprüche, dadurch gekennzeichnet, daß die Länge des Bereiches (11) des Schaftes (13), welcher anfänglich über das Werkstück (15) vorsteht, ungefähr das 3-fache des Durchmessers des Schaftes (13) beträgt.

7. Verfahren nach einem der vorstehenden Ansprüche, dadurch gekennzeichnet, daß die Höhe des gestauchten Kopfes (19), welcher über das Werkstück (15) vorsteht, geringfügig kleiner als das eineinhalbfache des Durchmessers des Schaftes (13) ist.

8. Verfahren nach Anspruch 1, dadurch gekennzeichnet, daß der Amboß (40) in seiner Endfläche einen Hohlraum (54) mit einer Rotationsinnenfläche aufweist, die in der Form des erwünschten gestauchten Kopfes (19) ausgestaltet ist, und daß der Rotationsschritt um die Achse (56) der Rotationsfläche ausgeführt wird.

9. Verfahren nach einem der vorstehenden Ansprüche, dadurch gekennzeichnet, daß das Abziehen stattfindet, nachdem der gestauchte Kopf ausreichend abgekühlt ist, so daß er aushärtet.

10. Verfahren nach Anspruch 9, dadurch gekennzeichnet, daß das Pressen beibehalten wird, bis der gestauchte Kopf (19) ausreichend abgekühlt ist, so daß er ausgehärtet.

11. Verfahren zum Ausbilden einer Verbindung durch ein Verbund-Befestigungselement mit einem Schaft, welcher viele lange Fasern (16) aufweist, welche durch ein thermoplastisches Bindemittel zusammengehalten werden, mit den Schritten:
Anordnen mehrerer Werkstückelemente, ausbilden einer Durchgangsöffnung durch jedes Werkstückelement, Ausrichten der Öffnungen, um eine Werkstückbohrung auszubilden, Einfügen des Befestigungselementschaftes (13) durch die Werkstückbohrung, Drücken eines hergestellten Kopfes (24) auf das Befestigungselement (10) gegen das Werkstück (15), und Anordnen eines Amboß (40) zum Stauchen des Endstückes (11) des Befestigungselement-Schaftes (13) gegen das Werkstück,
gekennzeichnet durch die weiteren Schritte:
Ausbilden eines Hohlraumes (54) auf der Endfläche des Amboß, welche durch eine Rotationsinnenfläche festgelegt ist, die in der kompletten Form eines gewünschten Befestigungselement-gestauchten Kopfes (19) ausgebildet ist, Drehen des Amboß um die Achse (56) der Rotationsfläche, Drücken des Amboß gegen das Befestigungselement-Endstück (11), wobei die Achse der Umdrehungsfläche mit der Längsachse des Endstückes ausgerichtet ist,
Stauchen des Endstückes bis dessen Material den Hohlraum ausfüllt, so daß der gestauchte Kopf (19) ausgebildet wird, Anhalten der Rotation des Amboß (40) während das Drücken des Amboß gegen den gestauchten Kopf fortgesetzt wird, und Abheben des Amboß von dem gestauchten Kopf, nachdem dieser sich unter die Schmelztemperatur des Bindemittels abgekühlt hat.

12. Verbindung mit einem Werkstück (15) und einem Befestigungselement (10), welches aus langen Verstärkungsfasern (16) ausgebildet ist, die durch ein thermoplastisches Material zusammengehalten werden, wobei das Befestigunqselement (10) einen werkstattgeformten gectauchten Kopf (19) aufweist, der in eine Oberfläche (17) des Werkstückes (15) eingreift, dadurch gekennzeichnet, daß der gestauchte Kopf (19) physikalische Eigenschaften aufweist, die von den Eigenschaften des Schaftes (13) der Befestigungselemente (10) aufgrund der Verformung durch Reibungswärme und Druck durch den rotierendan Amboß (40) abweichen, welcher gegen ein vorstehendes Ende (11) des Befestigungselementes (10) während der Rotation des Amboß (40) gepreßt wurde.

13. Verbindung nach Anspruch 12, dadurch gekennzeichnet, daß der gestauchte Kopf (19) kegelstumpfförmig ist und einen nach außen verlaufenden scheibenförmigen Flansch (21) aufweist, der in das Werkstück (15) eingreift und einstückig mit dem Befestigungselement-Schaft (13) und dem kegelstumpfförmigen Bereich ausgebildet ist, wobei der Flansch (21) Faserenden aufweist, die nach außen während der Verformung des Kopfes (19) versponnen wurden.

14. Verbindung nach Anspruch 13, dadurch gekennzeichnet, daß der gestauchte Kopf (19) einen nach außen verlaufenden scheibenförmigen Flansch (21) aufweist, der in das Werkstück (15) eingreift und einstückig mit dem Befestigungselement-Schaft (13) und dem gestauchten Kopf (19) ausgebildet ist, wobei der Flansch (21) Faserenden aufweist, welche während der Verformung des Kopfes (19) nach außen versponnen wurden.

## Revendications

1. Procédé pour déformer la queue (11) d'une tige de rivet (13) saillant à travers une pièce de travail (15), ladite tige (13) étant formée de matériaux composites comportant plusieurs longues fibres (16) maintenues ensemble par un liant thermoplastique, caractérisé par les étapes consistant à :
presser une enclume rotative (40) contre l'extrémité de ladite queue (11) pour chauffer lesdits liants par friction, suffisamment pour que le liant fonde ou se ramollisse et se déforme, en même temps que les extrémités adjacentes des fibres (16) qui sont repoussées par rotation vers l'extérieur autour de l'axe (56) de rotation, dans une tête inversée (19) dont le diamètre est suffisamment plus grand que la tige (13) pour empêcher que l'élément de fermeture (10) ne soit retiré de la pièce de travail (15); et
retirer ladite enclume (40) de ladite tête inversée (19).

2. Procédé selon la revendication 1, dans lequel ladite enclume (40) comporte une cavité (54) réalisée sur sa surface d'extrémité recevant ladite queue (11), et ladite étape de déformation est poursuivie jusqu'à ce que la matière de la queue déformée remplisse ladite cavité (54), formant ainsi la tête inversée (19) selon la forme de ladite cavité.

3. Procédé selon la revendication 2, dans lequel ladite enclume (40) a une surface d'extrémité annulaire entourant ladite cavité (54), et ladite cavité (54) est dimensionnée en rapport avec le volume de ladite queue (11) de façon que pendant ladite étape de déformation, des parties (21) de ladite queue déformée (11) sont repoussées par rotation vers l'extérieur de ladite cavité (54) et sont aplaties et comprimées entre ladite surface annulaire et la surface adjacente (17) de ladite pièce de travail (15).

4. Procédé selon les revendications 2 ou 3, dans lequel ladite cavité (54) a une forme tronconique avec une extrémité fermée et une extrémité ouverte plus grande qui facilite l'entrée sur ladite queue (11) et le retrait de ladite queue déformée (19).

5. Procédé selon la revendication 4, dans lequel l'extrémité ouverte de ladite cavité (54) a un diamètre d'environ 1,3 fois le diamètre de ladite tige (13), et l'extrémité fermée de ladite cavité (54) a un diamètre sensiblement égal au diamètre de la tige.

6. Procédé selon l'une quelconque des revendications précédentes, dans lequel la longueur de la partie (11) de ladite tige (13) saillant initialement derrière ladite pièce de travail (15) est d'environ trois fois le diamètre de ladite tige (13).

7. Procédé selon l'une quelconque des revendications précédentes, dans lequel la hauteur de la tête inversée (19) saillant derrière la pièce de travail (15) est légèrement inférieure à une fois et demie le diamètre de la tige (13).

8. Procédé selon la revendication 1, dans lequel l'enclume (40) comporte dans sa face d'extrémité, une cavité (54) ayant une surface intérieure de révolution configurée selon la forme de la tête inversée désirée (19), et ladite étape de rotation est réalisée autour de l'axe (56) de ladite surface de révolution

9. Procédé selon l'une quelconque des revendications précédentes, dans lequel ledit retrait survient après que ladite tête inversée soit suffisamment refroidie pour se solidifier.

10. Procédé selon la revendication 9, dans lequel ladite pression est maintenue jusqu'à ce que ladite tête inversée (19) ait suffisamment refroidie pour se solidifier.

11. Procédé pour former un joint en utilisant un élément de fermeture composite avec une tige comportant plusieurs longues fibres (16) maintenues ensemble par un liant thermoplastique comportant les étapes consistant à fournir plusieurs éléments de pièces de travail, à réaliser un trou à travers chacun desdits éléments de pièces de travail, à aligner lesdits trous pour former un alésage de pièce de travail, à insérer la tige (13) de l'élément de fermeture à travers ledit alésage de la pièce de travail, à presser une tête usinée (24) sur ledit élément de fermeture (10) contre ladite pièce de travail (15), et à fournir une enclume (40) pour refouler la queue (11) de la tige (13) de l'élément de fermeture contre ladite pièce de travail, caractérisé par les étapes supplémentaires consistant à fournir une cavité (54) sur la surface d'extrémité de ladite enclume qui est définie par une surface intérieure de révolution, configurée selon la forme générale d'une tête inversée (19) d'élément de fermeture souhaitée, à faire tourner ladite enclume autour de l'axe (56) de ladite surface de révolution, à presser ladite enclume contre la queue (11) de l'élément de fermeture, ledit axe de ladite surface de révolution étant aligné avec l'axe longitudinal de ladite queue, à refouler ladite queue jusqu'à ce que sa matière remplisse ladite cavité, formant ainsi ladite tête inversée (19), à arrêter la rotation de l'enclume (40) tout en continuant à presser ladite enclume contre ladite tête inversée, et à retirer ladite enclume de ladite tête inversée après que cette dernière ait refroidie en-dessous de la température de fusion dudit liant.

12. Joint comportant une pièce de travail (15) et un élément de fermeture (10) formé de longues fibres de renforcement (16) maintenues ensemble par une matière thermoplastique, ledit élément de fermeture (10) ayant une tête inversée (19) en forme de magasin recevant une surface (17) de la pièce de travail (15), caractérisé en ce que ladite tête inversée (19) a des caractéristiques physiques différentes de la tige (13) de l'élément de fermeture (10), résultant du fait qu'elle a été déformée par de la chaleur et une pression de friction au moyen d'une enclume rotative (40) ayant été pressée contre une extrémité saillante de l'élément de fermeture (10) pendant ladite rotation.

13. Joint selon la revendication 12, caractérisé en ce que ladite tête inversée (19) a une forme tronconique et une bride (21) en forme de rondelle s'étendant vers l'extérieur recevant ladite pièce de travail (15) et formant une seule pièce avec la tige (13) de l'élément de fermeture et la partie tronconique, ladite bride (21) comprenant des extrémités desdites fibres qui ont été repoussées par rotation vers l'extérieur pendant la formation de ladite tête (19).

14. Joint selon la revendication 13, caractérisé en ce que ladite tête inversée (19) comporte une bride (21) en forme de rondelle s'étendant vers l'extérieur recevant ladite pièce de travail (15) et formant une seule pièce avec la tige (13) de l'élément de fermeture et la tête inversée (19), ladite bride (21) comprenant des extrémités desdites fibres qui ont été repoussées par rotation vers l'extérieur pendant la formation de ladite tête.
